# EUROPEAN PATENT APPLICATION

(11) **EP 3 398 857 A1**
(43) Date of publication of application: **07.11.2018**
(21) Application number: 18170454.5
(22) Date of filing: 02.05.2018
(51) Int. Cl.: B64D 25/14

(54) **EVACUATION SLIDE CONNECTOR**

(30) Priority: 04.05.2017 US 201715586894
(71) Applicant: Goodrich Corporation, Charlotte, NC 28217-4578 (US)
(72) Inventor: VOLNY, Jaro S., Scottsdale, AZ Arizona 85251 (US); HARTMAN, Drew, Phoenix, AZ Arizona 85085 (US)
(74) Representative: Dehns

(57) **Abstract**

An evacuation slide (110) that includes a first portion (111) and a second portion (112) and a connector (120) that includes a first subunit (121) mounted to the first portion and a second subunit (122) mounted to the second portion. The first subunit (121) and the second subunit (122) may be configured to be detachably coupled together, and the connector (120) may include two different types of fasteners. The first subunit (121) may include a first patch (131) of hook-and-loop material and a first snap-fastener element (141) and the second subunit (122) of the connector may include a second patch (132) of hook-and-loop material and a second snap-fastener element (142).

## Description

### FIELD

The present disclosure relates to aircraft evacuation assemblies, and more specifically to evacuation slides.

### BACKGROUND

An evacuation slide assembly may include an inflatable slide that helps passengers disembark from an aircraft in the event of an emergency or other evacuation event. The slides may deploy from a door sill or a side of the aircraft fuselage. Conventional evacuation slides, however, may experience undesirable deployment characteristics. For example, the unfolding dynamics of the evacuation slide during deployment may affect whether the evacuation slide is properly and safely deployed.

### SUMMARY

According to various embodiments, the present disclosure provides an evacuation slide that includes a first portion, a second portion, and a connector having a first subunit mounted to the first portion and a second subunit mounted to the second portion. The first subunit of the connector and the second subunit of the connector are configured to be detachably coupled together and each subunit of the connector includes at least two different types of fasteners, according to various embodiments.

The first subunit of the connector may include a first patch of hook-and-loop material and a first snap-fastener element and the second subunit of the connector may include a second patch of hook-and-loop material and a second snap-fastener element. In various embodiments, the first patch of hook-and-loop material is configured to detachably couple with the second patch of hook-and-loop material and the first snap-fastener element is configured to detachably couple with the second snap-fastener element. The first snap-fastener element may be disposed within bounds of the first patch of hook-and-loop material and the second snap-fastener element may be disposed within bounds of the second patch of hook-and-loop material.

In various embodiments, the connector is a directional-release connector. In various embodiments, detachment of the first subunit from the second subunit is resisted in response to a restrained force exerted on the second subunit in a restraint direction, relative to the first subunit, while detachment of the first subunit from the second subunit is enabled in response to a release force exerted on the second subunit in a release direction, relative to the first subunit. In various embodiments, the evacuation slide may include a longitudinal axis in a deployed state that extends from a head end to a toe end, and the restrained force may include shear lateral forces and the restraint direction is substantially perpendicular to the longitudinal axis of the evacuation slide. In various embodiments, the restrained force is an upward tension force and the restraint direction is substantially perpendicular to the longitudinal axis. In various embodiments, the restrained force is a first longitudinal shear force and the restraint direction is substantially parallel to the longitudinal axis and from the toe end to the head end. In such embodiments, the release force may be a second longitudinal shear force and the release direction may be substantially parallel to the longitudinal axis from the head end to the toe end. In various embodiments, the connector is a first connector and the evacuation slide further includes a second connector, wherein the first connector and the second may be have different release properties.

Also disclosed herein, according to various embodiments, is an evacuation assembly of an aircraft. The evacuation assembly may include an evacuation slide having a first portion and a second portion. The evacuation assembly may also include a connector having a first subunit mounted to the first portion of the evacuation slide and a second subunit mounted to the second portion of the evacuation slide. The first subunit and the second subunit are configured to be detachably coupled together, according to various embodiments, and each subunit of the connector may have two different types of fasteners.

Also disclosed herein, according to various embodiments, is a method of packing an evacuation slide of an evacuation assembly of an aircraft. The method may include folding the evacuation slide such that a first portion of the evacuation slide is adjacent a second portion of the evacuation slide. The method may also include engaging a first subunit of a connector, mounted to the first portion of the evacuation slide, with a second subunit of the connector, mounted to the second portion of the evacuation slide. The connector may include two different types of fasteners.

In various embodiments, the first subunit of the connector may include a first patch of hook-and-loop material and a first snap-fastener element. The second subunit of the connector may include a second patch of hook-and-loop material and a second snap-fastener element. Accordingly, engaging the first subunit with the second subunit may include engaging the first patch of hook-and-loop material with the second patch of hook-and-loop material and engaging the first snap-fastener element with the second snap-fastener element. In various embodiments, engaging the first patch of hook-and-loop material with the second patch of hook-and-loop material and engaging the first snap-fastener element with the second snap-fastener element is performed in a single motion. In various embodiments, engaging the first snap-fastener element with the second snap-fastener element provides audible feedback of engagement between the first subunit and the second subunit.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 is a schematic view of an aircraft showing an evacuation slide of an evacuation assembly in a deployed state, in accordance with various embodiments;
FIG. 2 is a schematic perspective view of a first subunit and a second subunit of a connector, in accordance with various embodiments;
FIG. 3A is a schematic side view of an evacuation slide in a first stage of deployment, in accordance with various embodiments;
FIG. 3B is a schematic side view of an evacuation slide in a second stage of deployment, in accordance with various embodiments;
FIG. 3C is a schematic side view of an evacuation slide in a third stage of deployment, in accordance with various embodiments; and
FIG. 4 is a schematic flow chart diagram of a method of packing an evacuation slide of an evacuation assembly of an aircraft, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation. Throughout the present disclosure, like reference numbers denote like elements. Accordingly, elements with like element numbering may be shown in the figures but may not be necessarily be repeated herein for the sake of clarity.

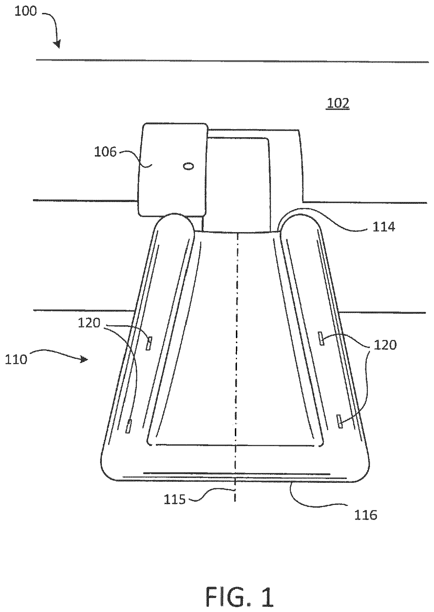

In various embodiments, and with reference to FIG. 1, an evacuation slide 110 of an evacuation assembly of an aircraft 100 is provided. Aircraft 100 may include a fuselage 102 with wings fixed to the fuselage 102. Emergency exit door 106 may be disposed on the fuselage 102 over one of the wings or at some other location along the fuselage 102. The evacuation slide 110 and other components of the evacuation assembly may be housed within a packboard or other compartment mounted to the aircraft 100. The evacuation assembly may jettison a blowout panel to deploy the evacuation slide 110, such as an inflatable evacuation slide, in response to the emergency exit door 106 opening or in response to another evacuation event. For example, FIG. 1 schematically depicts the evacuation slide 110 in a deployed state extending from the fuselage 102 of the aircraft 100.

Conventional evacuation slides may be susceptible to undesirable deployment characteristics. Improper restraint mechanisms and procedures or inclement weather conditions, among other factors, may cause conventional slides to deploy in an uncontrolled or unsafe manner. For example, if an evacuation slide is not properly restrained/controlled during deployment, portions or sections of the slide may unfurl and sag downwards before being properly inflated. Such sagging sections may get caught on portions of the aircraft and may be damaged or may otherwise create an unsafe evacuation environment. In another example, if an evacuation slide is not properly restrained, the toe end 116 of a slide may extend too high relative to the ground/water. Such a deployment may cause the evacuation slide to "kite" (especially if the evacuation slide is deployed in high wind conditions) such that the toe end 116 of the slide does not touch the ground, rendering the slide less usable. Furthermore, if the slide lifts off the ground above the level of the emergency exit door 106, the slide may even block the aircraft exit and prevent safe evacuation of passengers and crew.

Disclosed herein, according to various embodiments, is an evacuation slide 110 of an evacuation assembly that includes a connector 120 (e.g. one or more connectors). The connector 120 facilitates proper deployment of the evacuation slide 110. Said differently, the evacuation slide 110 of the present disclosure can be deployed in a controlled and/or staged manner, thereby allowing the evacuation slide 110 to safely and properly extend from a head end 114 of the evacuation slide 110 mounted to the aircraft 100 to a toe end 116 of the evacuation slide 110 that is contacting the ground (or water, in the event of a water landing). In various embodiments, the evacuation slide 110 includes a longitudinal axis 115 that extends from the head end 114 to the toe end 116.

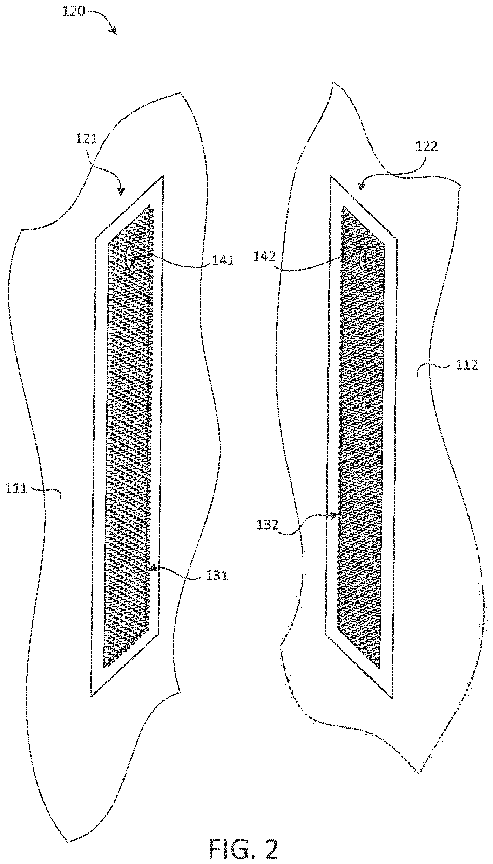

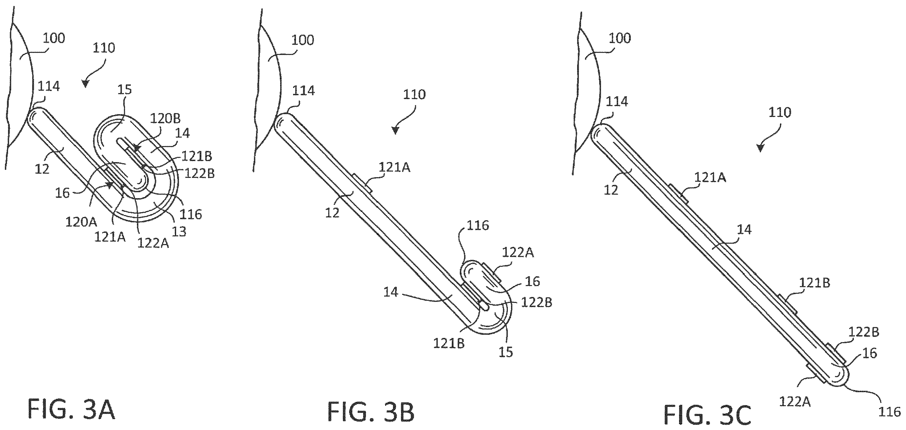

The connector 120, according to various embodiments and with reference to FIG. 2, includes a first subunit 121 and a second subunit 122. The first subunit 121 is mounted to a first portion 111 of the evacuation slide 110 and the second subunit 122 is mounted to a second portion 112 of the evacuation slide 110, according to various embodiments. The first and second subunits 121, 122 of the connector 120 may be sewn, adhered, bonded, or otherwise mounted to the evacuation slide 110. The first subunit 121 and the second subunit 122 are generally configured to be detachably coupled together in order to hold the respective portions 111, 112 of the evacuation slide 110 together. As described in greater detail below with reference to FIGS. 3A, 3B, and 3C, the one or more connectors 120 help to control the unfolding and unfurling dynamics of the evacuation slide 110 during deployment.

In various embodiments, the connector 120 includes two different types of fasteners for holding and/or retaining the first portion 111 of the evacuation slide 110 to the second portion 112 of the evacuation slide 110. In various embodiments, the two different types of fasteners of the connector 120 jointly provide a desired level of restraint to facilitate proper deployment of the evacuation slide 110. Said differently ,the two different types of fasteners of the connector 120 can provide increased resistance to forces that would otherwise cause a connector with a single type of fastener to become disconnected. In various embodiments, the two different types of fasteners of the connector 120 provide a level of redundancy so that the two portions 111, 112 of the evacuation slide 110 can remain fastened together in the event that one of the types of fasteners fails.

In various embodiments, for example, the two different types of fasteners include a hook-and-loop type fastener and a snap-fastener. A hook-and-loop type fastener (also referred to as a hook-and-pile fastener, touch fastener, or Velcro ®) is comprised of two sections, one section having an array of hook-like projections that engage an array of loop-like projections of a second section. A snap-fastener (also referred to as a press stud, a popper, a snap, or a tich) is also comprised of two sections, one having a stud, projection, or lip that can be pressed into engagement with a complementary groove, receptacle, socket, or orifice to create a resistance and/or interference fit between the two sections. Accordingly, in various embodiments, the first subunit 121 of the connector 120 may include a first patch 131 of hook-and-loop material (e.g., one of either an array of hooks or an array of loops) and a first snap-fastener element 141 (e.g., one of either a male stud or a female receptacle) while the second subunit 122 of the connector 120 may include a second patch 132 of hook-and-loop material (e.g., the other of the array of hooks or the array of loops) and a second snap-fastener element 142 (e.g., the other of the male stud or the female receptacle). In various embodiments, the first patch 131 is configured to detachably couple with the second patch 132 and the first snap-fastener element 141 is configured to detachably couple with the second snap-fastener element 142.

In various embodiments, and with continued reference to FIG. 2, the first and second snap-fastener elements 141, 142 are disposed within bounds of the first and second patches 131, 132, respectively. Said differently, the first patch 131 may circumscribe the first snap-fastener element 141 such that the first snap-fastener element 141 lies within the confines of the outer periphery of the first patch 131 and the second patch 132 may circumscribe the second snap-fastener element 142 such that the second snap-fastener element 142 lies within the confines of the outer periphery of the second patch 132. The patches 131, 132 of hook-and-loop material may have various shapes, such as rectangular (e.g., as depicted), circular, elliptical, polygonal, etc. In various embodiments, the patches 131, 132 may be shaped into a strip or a ribbon that extends along the respective portions 111, 112 of the evacuation slide 110. In various embodiments, and with momentary reference to FIG. 1, the patches 131, 132 are shaped to extend substantially parallel to the longitudinal axis 115 of the evacuation slide 110. In various embodiments, one or more snap-fastener elements may be disposed within each patch of hook-and-loop material. The one or more snap-fastener elements 141, 142 may be positioned at or near an end of the respective patches 131, 132 (e.g., as shown in FIG. 2). In various embodiments, the snap-fastener elements 141, 142 may be positioned in other locations relative to the patches 131, 132.

In various embodiments, the connector 120 may be a directional-release connector. Said differently, the structure of the snap-fastener elements 141, 142 may prevent release/decoupling (e.g., increase the coupling strength) in response to forces in certain directions but may enable (e.g., decrease the coupling strength) in response to forces in other directions. For example, a portion of a stud of one of the snap-fastener elements may have a protrusion that is specifically configured to be retained (or released) by a specific region of the corresponding socket of the other snap-fastener element, thereby restricting the release thereof to certain relative positions of the snap-fastener elements (e.g., enabling directional specific release and/or directional specific retention). In various embodiments, for example, detachment of the first subunit 121 from the second subunit 122 is resisted in response to a restrained force exerted on the second subunit 122 in a restraint direction, relative to the first subunit, while detachment of the first subunit 121 from the second subunit 122 is enabled in response to a release force exerted on the second subunit 122 in a release direction, relative to the first subunit 121.

In various embodiments, the restrained force is a shear lateral force and the restraint direction is substantially perpendicular to the longitudinal axis 115 of the evacuation slide 110 such that decoupling of the subunits 121, 122 of the connector 120 is prevented, or at least restricted, in response to lateral shear forces. For example, the snap-fastener elements 141, 142 may be more easily disconnected/decoupled from each other in response to tension forces than shear forces, thereby preventing slippage of sections the evacuation slide 110, as described in greater detail below.

In various embodiments, however, the restrained force also includes an upward tension force and the restrained direction is also substantially perpendicular to the longitudinal axis 115 of the evacuation slide 110 such that decoupling of the subunits 121, 122 of the connector 120 is prevented, or at least restricted, in response to tension forces. In various embodiments, the connector 120 may be configured to only release/decouple in response to a specific direction of longitudinal shear force. For example, a first longitudinal shear force in a first direction parallel to the longitudinal axis 115 of the evacuation slide 110 extending from the toe end 116 to a head end 114 of the evacuation slide may be restricted while a second longitudinal shear force in a second direction parallel to the longitudinal axis 115 of the evacuation slide 110 extending from the head end 114 to the toe end 116 may be enabled, thereby allowing directionally specific release of the subunits 121, 122 of the connector 120.

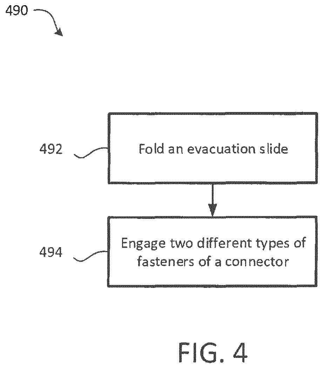

In various embodiments, the connector 120, with its two different type of fasteners, is configured to have a high degree of shear resistance to prevent shear movement/slippage between folded, juxtaposed sections of the evacuation slide 110 during deployment. The evacuation slide 110, in a collapsed, condensed, un-inflated state, and may be folded or otherwise packed, as described in greater detail below with reference to FIG. 4, and housed in a confined space/compartment. In the event of an emergency or other evacuation event, the evacuation slide 110 may be deployed and the one or more connectors 120, which may be strategically placed at locations along the evacuation slide 110, can hold coupled portions (e.g., portions 111, 112) together until sufficient inflation pressure builds up within a section of the evacuation slide to decouple the first and second subunits 121, 122 of the connector 120. That is, the connector 120 holds the folds in the evacuation slide 110 in place (e.g., prevents slippage) to control the unfolding/deployment dynamics of the evacuation slide 110 and thereby prevents, or at least mitigates, uncontrolled unravelling of the evacuation slide 110.

In various embodiments, and with reference to FIGS. 3A, 3B, and 3C, a controlled, staged deployment of the evacuation slide 110 is schematically depicted. For example, the evacuation slide 110, in an initial stage of deployment and with reference to FIG. 3A, may have two connectors 120A, 120B that are holding the evacuation slide 110 in a first folded state. In the first folded state (e.g., the initial stage of deployment), the first subunit 121A and the second subunit 122A of the first connector 120A are coupled together to hold section 12 of the evacuation slide 110 to section 16 of the evacuation slide 110 while the first subunit 121B and the second subunit 122B of the second connector 120B are coupled together to hold section 14 of the evacuation slide 110 to section 16 of the evacuation slide, as shown. In this first folded state, for example, various folds 13, 15 may be formed in the evacuation slide 110. In this initial stage of deployment, the first section 12 of the evacuation slide 110 may be filling with pressurize fluid, for example, while the connectors 120A, 120B hold the folds 13, 15 in place and thus prevent or at least restrict the flow of fluid into the second and third sections 14, 16 of the evacuation slide 110, thereby allowing the evacuation slide 110 to be incrementally unfurled/deployed.

Accordingly, and with reference to FIGS. 3B, a second folded state of the evacuation slide 110 is shown (e.g., an intermediate stage of deployment) in which the first connector 120A, comprised of the first subunit 121A and the second subunit 122A, have been decoupled due to a sufficient buildup of pressure within the first section 12 of the evacuation slide 110. This decoupling of the first connector 120 enables the second section 14 of the evacuation slide 110 to extend, according to various embodiments. The third folded state, e.g., the final deployment stage as shown in FIG. 3C, is after the second connector 120B has decoupled, thus allowing the third section 16 of the evacuation slide 110 to unfurl and thus completing the deployment of the evacuation slide 110 in a controlled, staged manner. In various embodiments, if multiple connectors 120A, 120B are employed, the connectors may have different release properties (e.g., release/decouple in response to different directions and/or different magnitudes of force).

In various embodiments, and with reference to FIG. 4, a method 490 of packing the evacuation slide 110 of the evacuation assembly is provided. The method 490 includes folding the evacuation slide 110 at step 492 and engaging two different types of fasteners of the connector 120 as step 494. Step 492 is performed such that a first portion of the evacuation slide is adjacent a second portion of the evacuation slide, in accordance with various embodiments. Step 494, according to various embodiments, includes engaging the first subunit 121 of the connector 120, mounted to the first portion 111 of the evacuation slide 110, with the second subunit 122 of the connector 120, mounted to the second portion 112 of the evacuation slide 110.

In various embodiments, engaging the first subunit 121 with the second subunit 122 comprises engaging the first patch 131 with the second patch 132 and engaging the first snap-fastener element 141 with the second snap-fastener element 142. In various embodiments, engaging the first patch 131 with the second patch 132 and engaging the first snap-fastener element 141 with the second snap-fastener element 142 is performed in a single motion. In various embodiments, engaging the first snap-fastener element with the second snap-fastener element provides audible feedback of engagement between the first subunit and the second subunit, thereby ensuring the portions 111, 112 of the evacuation slide 110 are adequately and properly connected during folding/packing.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An evacuation slide (110) comprising:
a first portion (111) and a second portion (112); and
a connector (120) comprising a first subunit (121) mounted to the first portion and a second subunit (122) mounted to the second portion, the first subunit and the second subunit configured to be detachably coupled together, wherein each subunit of the connector (120) comprises at least two different types of fasteners.

2. The evacuation slide of claim 1, wherein the first subunit (121) of the connector comprises a first patch (131) of hook-and-loop material and a first snap-fastener element (141) and the second subunit (122) of the connector comprises a second patch (132) of hook-and-loop material and a second snap-fastener element (142), wherein the first patch (131) of hook-and-loop material is configured to detachably couple with the second patch (132) of hook-and-loop material and the first snap-fastener element (141) is configured to detachably couple with the second snap-fastener element (142).

3. The evacuation slide of claim 2, wherein the first snap-fastener element (141) is disposed within bounds of the first patch (131) of hook-and-loop material and the second snap-fastener element (142) is disposed within bounds of the second patch (132) of hook-and-loop material.

4. The evacuation slide of any preceding claim, wherein the connector (120) is a directional-release connector.

5. The evacuation slide of claim 4, wherein detachment of the first subunit (121) from the second subunit (122) is resisted in response to a restrained force exerted on the second subunit (122) in a restraint direction, relative to the first subunit, while detachment of the first subunit (121) from the second subunit (122) is enabled in response to a release force exerted on the second subunit (122) in a release direction, relative to the first subunit; and preferably
wherein the evacuation slide comprises a longitudinal axis (115) in a deployed state that extends from a head end (116) to a toe end (114), wherein the restrained force comprises shear lateral forces and the restraint direction is substantially perpendicular to the longitudinal axis, and more preferably
wherein the restrained force comprises an upward tension force and the restraint direction is substantially perpendicular to the longitudinal axis; and preferably wherein:
the restrained force comprises a first longitudinal shear force and the restraint direction is substantially parallel to the longitudinal axis and from the toe end (114) to the head end (116); and
the release force comprises a second longitudinal shear force and the release direction is substantially parallel to the longitudinal axis from the head end (116) to the toe end (114).

6. The evacuation slide of any preceding claim, wherein:
the connector (120) is a first connector (120A);
the evacuation slide further comprises a second connector (120B); and
the first connector and the second connector have different release properties.

7. An evacuation assembly of an aircraft, the evacuation assembly comprising:
an evacuation slide (110) comprising a first portion (111) and a second portion (112); and
a connector (120) comprising a first subunit (121) mounted to the first portion of the evacuation slide and a second subunit (122) mounted to the second portion of the evacuation slide, the first subunit (121) and the second subunit (122) configured to be detachably coupled together, wherein the connector (120) comprises two different types of fasteners.

8. The evacuation assembly of claim 7, wherein the first subunit (121) of the connector comprises a first patch (131) of hook-and-loop material and a first snap-fastener element (141) and the second subunit (122) of the connector comprises a second patch (132) of hook-and-loop material and a second snap-fastener element (142), wherein the first patch (131) of hook-and-loop material is configured to detachably couple with the second patch (132) of hook-and-loop material and the first snap-fastener element (141) is configured to detachably couple with the second snap-fastener element (142).

9. The evacuation assembly of claim 8, wherein the first snap-fastener element (141) is disposed within bounds of the first patch (131) of hook-and-loop material and the second snap-fastener element (142) is disposed within bounds of the second patch (132) of hook-and-loop material.

10. The evacuation assembly of any of claims 7 to 9, wherein the connector (120) is a directional-release connector.

11. The evacuation assembly of claim 10, wherein detachment of the first subunit (121) from the second subunit (122) is resisted in response to a restrained force exerted on the second subunit (122) in a restraint direction, relative to the first subunit (121), while detachment of the first subunit (121) from the second subunit (122) is enabled in response to a release force exerted on the second subunit (122) in a release direction, relative to the first subunit (121), and preferably
wherein the evacuation slide comprises a longitudinal axis (115) in a deployed state that extends from a head end (116) to a toe end (114), wherein the restrained force comprises shear lateral forces and the restraint direction is substantially perpendicular to the longitudinal axis; and more preferably wherein:
the restrained force comprises an upward tension force and the restraint direction is substantially perpendicular to the longitudinal axis;
the restrained force comprises a first longitudinal shear force and the restraint direction is substantially parallel to the longitudinal axis and from the toe end (114) to the head end (116); and
the release force comprises a second longitudinal shear force and the release direction is substantially parallel to the longitudinal axis from the head end (116) to the toe end (114).

12. A method of packing an evacuation slide of an evacuation assembly of an aircraft, the method comprising:
folding the evacuation slide such that a first portion of the evacuation slide is adjacent a second portion of the evacuation slide; and
engaging a first subunit of a connector, mounted to the first portion of the evacuation slide, with a second subunit of the connector, mounted to the second portion of the evacuation slide, wherein the connector comprises two different types of fasteners.

13. The method of claim 12, wherein:
the first subunit of the connector comprises a first patch of hook-and-loop material and a first snap-fastener element;
the second subunit of the connector comprises a second patch of hook-and-loop material and a second snap-fastener element; and
engaging the first subunit with the second subunit comprises engaging the first patch of hook-and-loop material with the second patch of hook-and-loop material and engaging the first snap-fastener element with the second snap-fastener element.

14. The method of claim 13, wherein:
the first snap-fastener element is disposed within bounds of the first patch of hook-and-loop material;
the second snap-fastener element is disposed within bounds of the second patch of hook-and-loop material; and
engaging the first patch of hook-and-loop material with the second patch of hook-and-loop material and engaging the first snap-fastener element with the second snap-fastener element is performed in a single motion.

15. The method of claims 13 or 14, wherein engaging the first snap-fastener element with the second snap-fastener element provides audible feedback of engagement between the first subunit and the second subunit.
